Europäisches Patentamt

(19) **European Patent Office**

Office européen des brevets

(11) Publication number: **0 020 011**
A2

(12) # EUROPEAN PATENT APPLICATION

(21) Application number: **80301285.5**

(22) Date of filing: **22.04.80**

(51) Int. Cl.³: **A 23 B 5/00, A 01 K 43/00**

(30) Priority: **25.04.79 GB 7914353**

(43) Date of publication of application: **10.12.80**
**Bulletin 80/25**

(84) Designated Contracting States: **DE FR GB IT NL**

(71) Applicant: **Adams Egg Products Limited, Telford Crescent Speedwell Estate, Staveley Derbyshire (GB)**

(72) Inventor: **Adams, Roger Ernest, Tinkley Lane Farm Tinkley Lane, Nr. Chesterfield Derbyshire (GB)**

(74) Representative: **Dealtry, Brian et al, Eric Potter & Clarkson 14, Oxford Street, Nottingham NG1 5BP (GB)**

(54) **Packaging of shelled hard boiled eggs and apparatus therefor.**

(57) A process for packaging shelled hardboiled eggs including the steps of cooking fresh eggs to produce hardboiled eggs, shelling the hardboiled eggs to produce shelled hardboiled eggs, treating the eggs so as to lower the pH at the interface betwen the white and yolk of each egg so as to inhibit formation of a dark colouration around the yolk, and enclosing the eggs in a hemetrically sealable container which is subsequently sealed and sterilised by a heat treatment.

```
┌──────────┐     ┌─────────┐     ┌─────────┐
│ Pre-heat │ ──► │ Boiling │ ──► │ Cooling │
└──────────┘     └─────────┘     └─────────┘
                                      │
                                      ▼
┌───────────┐     ┌─────────────┐
│ Packaging │ ◄── │ De-shelling │
└───────────┘     └─────────────┘
```

EP 0 020 011 A2

## PACKAGING OF HARD BOILED EGGS

The present invention relates to packaging of shelled hard boiled eggs.

Storage of shelled hard boiled eggs for immediate consumption has been achieved in the past by immersing the hardboiled eggs in a pickling solution. Although hardboiled eggs will remain in an edible condition for many weeks whilst immersed in the pickling solution, one of the major drawbacks in storing hardboiled eggs in a pickling solution is that the pickling solution inevitably colours the taste of the egg.

It has been proposed to store hardboiled eggs in a weak pickling solution so as to reduce the disadvantage of colouring the taste of the egg. Unfortunately, it has been found that by reducing the strength of the pickling or preserving solution the shelf life of the stored eggs is reduced to only a few weeks and that there can be a tendency for a dark ring to be present around the egg yolk. The presence of this dark ring is undesirable as it reduces the visual appeal of the egg. Even with preservation in such a weak solution the eggs can still have a taste which is tainted by the preservative. Additionally the texture of the egg white usually appears harder than that of a freshly boiled egg.

The present invention aims to provide a process for packaging shelled hardboiled eggs whereby the packaged hardboiled eggs remain in an edible condition for several weeks without impairing the taste of the eggs and inhibits the formation of a dark ring surrounding the yolk.

In particular, the present invention provides a process for packaging shelled hardboiled eggs including the steps of cooking fresh eggs to produce hardboiled eggs, shelling the hardboiled eggs to produce shelled hardboiled eggs, treating the eggs so as to lower the pH at the interface between the white and yolk of each egg so as to inhibit formation of a dark colouration around the yolk, and enclosing the eggs in a hermetically sealable container which is subsequently sealed and sterilised by a heat treatment.

Reference is now made to the accompanying drawings in which :-

Figure 1 is a schematic diagram of procedural steps in accordance with the present invention.

Figure 2 is a perspective view of apparatus for de-shelling cooked eggs.

Figure 3 is a plan view of a storage and feed means shown in Figure 2.

Figure 4 is a schematic view of a former for packaging eggs in accordance with the present invention.

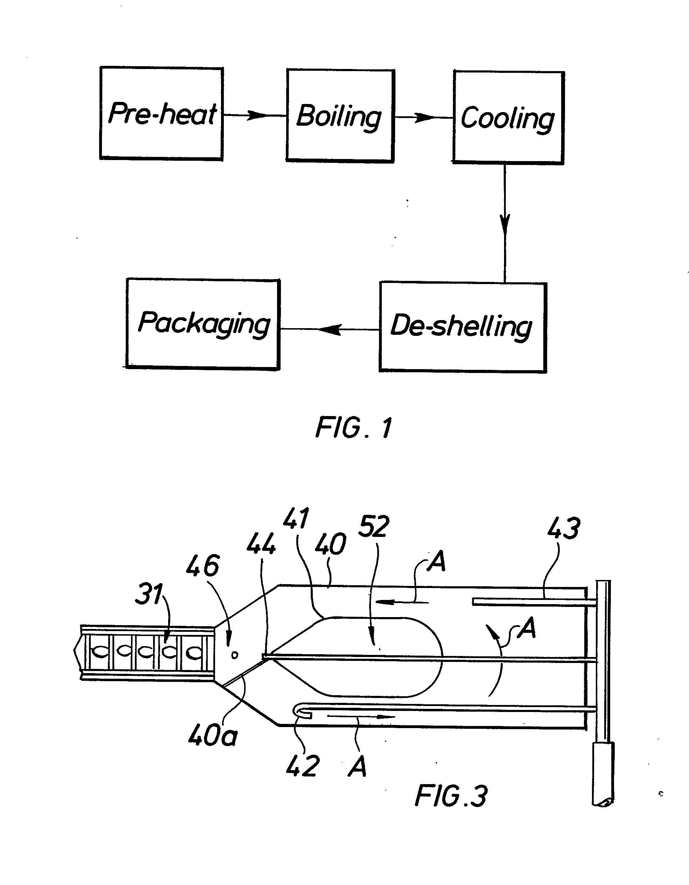

As illustrated in Figure 1 fresh eggs are preheated prior to being cooked by boiling in water. Preheating of the eggs is performed in order to reduce thermal shock when the eggs are immersed in boiling water and thereby reducing the likelihood of shells cracking. This is important as it is desirable for the eggs to reach maximum cooking temperature as quickly as possible without cracking of the shells. Ideally, the preheating step is performed so as to raise the temperature of the eggs to the maximum temperature possible without adversely affecting the eggs such as causing coagulation of the egg white or adversely affecting processing of the eggs. The length of time for which eggs are exposed to the preheating step is chosen so as to be sufficient for the eggs to reach a constant temperature.

The eggs are preferably received in pocketed trays which permit eggs to be closely spaced to one another whilst permitting water to circulate therebetween and also permit trays to be stacked one above the other. Conveniently, closely spaced rows of stacked trays are supported by a carrying frame which enables the stacked eggs to be transported from a preheating water tank to a cooking water tank wherein water is maintained in a boiling

-3-

condition. Close packing of eggs in the boiling tank is desirable since it helps to reduce thermal shock to the eggs on initial immersion in the tank.

The eggs remain in the boiling tank for a sufficient time for cooking to take place and they are then subsequently transferred to a cooling tank wherein they are quickly cooled by immersion in cold water in order to achieve a temperature of about $10^{\circ}C$ at the centre of the yolk, preferably within 20 minutes to reduce the intensity or likelihood of the formation of a dark ring at the yolk/white interface. The cooled eggs are then transferred to the de-shelling apparatus illustrated in Figure 3. The eggs are initially deposited in a storage and feed means 30 which operates to store a quantity of cooked eggs and feed them to a feed conveyor 31 which then transfers the fed eggs to a de-shelling device 33.

The storage and feed means 30 comprises a tank 40 filled with water. The tank includes a partition wall 41 and three water jets 42, 43 and 44 which are arranged to cause a flow of water in the direction of arrows A about the partition wall 41. In order to maintain the eggs in a state of buoyancy downwardly directed jets 45 are provided which cause jets of water to hit the bottom of the tank and thereby cause uplifting currents to be created. Eggs contained in tank 40 are continuously urged toward a collection area 46 whereat they amass. Blades (not shown) of a conveyor 31 pass through the collection area 46 and each carry an egg from collection area 46 to a chute 48 which guides the eggs into the de-shelling device 33. Accordingly the rate of feed of conveyor 31 may be varied to suit the rate of throughput through the de-shelling device 33 without affecting rate of pick-up of eggs from the collection area 46. Conveniently conveyor 31 is driven by a variable motor 35 which is controllable for varying the rate of feed of the conveyor.

In order to create circulation of water within tank 40, a pump 50 is provided which draws in water from the collection area 46 and expels the drawn-in water through jets 42, 43, 44 and 45. As seen in Figure 3 jet 44 is arranged to direct a jet of water directly toward the collection area 46 so as to ensure eggs are urged into contact with the conveyor.

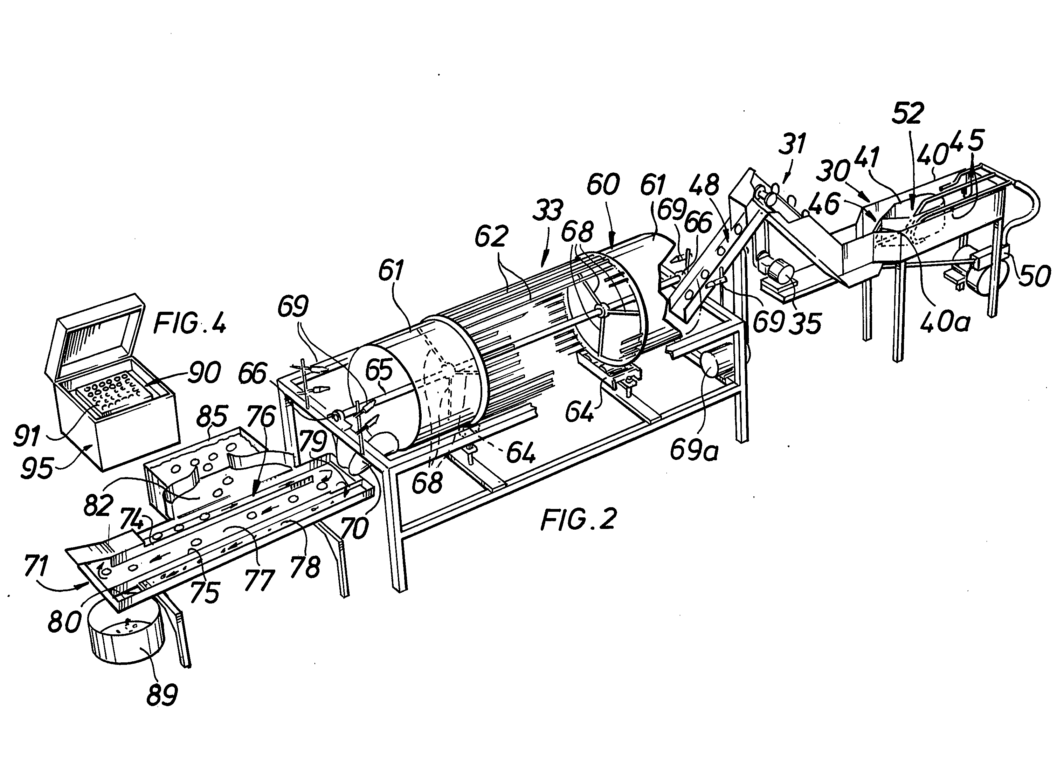

As seen in Figures 2 and 3, the partition wall 41 encloses a central area 52 which is filled with water and may be used to store additional eggs. Conveniently water is supplied to the central area 52 by maintaining the water level within tank 40 above the partition wall 41. A grill 40a is provided in order to enable circulation of water to occur completely around the partition wall 41.

The de-shelling device 33 includes a rotatable drum 60 having solid walled end portions 61 separated by a plurality of circumferentially spaced rods 62 which extend therebetween. The spacing between adjacent rods 62 is sufficient to prevent eggs to fall therebetween and is preferably chosen to be as large as possible without permitting eggs to fall therebetween.

The drum 60 is rotatably supported on two pairs of rollers 64 which are mounted on a support frame 64a. A drive shaft 65 extends along the length of the drum 60 and is supported in journals 66. Radial arms 68 extend between each end portion 61 and the shaft 65 in order to connect shaft 65 to the drum. The shaft 65 is driven by a motor 69 in order to rotate drum 60. The rotational axis of drum 60 is inclined downwardly from the end to which eggs are delivered by conveyor 31 so that during rotation of drum 60 eggs are induced to move slowly along the drum to be discharged from its lowermost end.

Whilst the eggs move across the central portion of the drum as defined by rods 62 successive rods repeatedly hit the eggs and cause the shells thereof to fracture. Additionally the impact of the rods on the eggs cause the eggs to elongate and consequently the membrane between the egg shell and egg white is caused to rupture. Subsequent impact of rods 62 on eggs having fractured shells and ruptured membranes can cause the shell and membrane to separate from the egg and fall past the rods. The rate of rotation of the drum and rate of feed of eggs are controlled to provide a maximum throughput. In order to facilatate movement of eggs along drum 60 and also facilatate removal of loose shell, water jets 69 are provided for spraying water into the interior of drum 60.

Eggs emerging from the de-shelling device 33 are fed onto a chute 70 which delivers eggs into a collection trough 71. The trough 71 is partitioned by walls 74, 75 to define three channels 76, 77 and 78. Water is circulated along channels 76 and 77 in the direction of arrows B which has the affect of moving the eggs deposited from the de-shelling device 33 along channels 76 and 77 in the same direction as the water flow. The partition wall 75 is provided with a recess 79 which defines a wier permitting an overflow of water to run along channel 78 to exit through an opening 80. The eggs being deposited into channel 77 by the de-shelling device 33 are either partially or completely shelled. Accordingly, in use, an operative picks up eggs from channel 77, removes any remaining shell on the egg and deposits the egg onto chute 82 which directs the egg into a tank 85. The removed shell is deposited into channel 78 and is carried through opening 80 to be deposited into a basket 89 by the stream of water running along channel 78.

The de-shelled eggs contained in tank 85 are then immersed in an acidic dipping solution which serves the purpose of lowering the pH value at the interface between the egg yolk and egg white. It is appreciated that lowering of pH at the yolk/white interface depends upon the rate of diffusion of the acidic solution through the egg white. Accordingly, the strength of acidic solution used and length of immersion is chosen so that the pH value at the yolk/white interface stabilisers at an acidic value preferably between 4.5 to 7, more preferably between 6.5 to 6.95.

Preferably the acidic dipping solution into which the shelled eggs are immersed is a citric acid solution which contains between 0.5% to 10% by weight citric acid. Preferably, the concentration does not exceed about 5% by weight of citric acid, more preferably the concentration is about 3-4% by weight citric acid.

The length of time for which the eggs are immersed in the dipping solution varies with the concentration of the solution. Typically, the length of immersion varies from 5 to 30 minutes and is at least about 15 minutes with a concentration of 3-4% by weight citric acid. However these times can be varied depending on the intensity of the dark ring formation which may be determined by cutting open sample cooked eggs.

After immersion in the dipping solution, the eggs are packaged in a sealable container.

In the preferred process, the eggs whilst still moist with the dipping solution are placed between two sheets of plastics material which are heat sealed to one another in an evacuated chamber so as to define a container enclosing the eggs. The plastics material may either be in the form of bags into which the eggs are placed prior to sealing or it may be in sheet form of which is wrapped about the eggs.

The plastics material is impervious to air and may withstand heat sterilisation temperatures. Suitable plastics material may be a polythene/nylon laminate or polypropylene. Advantageously, the plastics material is flexible enough not to distort the shape of the eggs when forming said container. The eggs are preferably arranged within the container so that they are spaced from one another. This is conveniently achieved by using a former 90 as shown in Figure 4 which includes a series of depressions 91. A layer of plastics material is laid

0020011

onto the former 90 and individual eggs are placed on the plastics material above each depression. A further layer of plastics material is laid on top of the eggs and the former is heated in an evacuated chamber 95 to effect heat sealing of the layers of plastics material.

After production of the container enclosing the eggs, the container is subjected to heat treatment which in combination with the citric acid present kills bacteria within the container to provide a sterilised environment. Additionally, the presence of the citric acid solution within the sterile container ensures that stabilisation of the pH at the yolk/white interface occurs and also helps reduce growth of new bacteria. Conveniently the heat treatment comprises immersioning each container in boiling water for a sufficient length of time to achieve sterilisation. Immersion for 1 to 3 minutes has been found sufficient in practice.

The containers may then be stored in boxes awaiting use. It has been found that eggs packaged in accordance with the present invention have a shelf life of at least 21 days, do not have a dark ring formation about the yolk, do not have an impaired taste and have a white consistency which is similar to that of a freshly cooked hardboiled egg.

If desired, an alternative way of cooking of the eggs may be achieved by boiling them in an acidic solution. Thus fresh eggs may be cooked by boiling in a weak acidic boiling solution which partially dissolves the shell during cooking and facilatates removal of the shell. The acidic solution preferably contains between 0.5 to 2.5% by weight citric/boric acid. Additionally, it has been found beneficial to include a strong acid such as sulphuric acid which removes calcium ions from the solution as a calcium sulphate precipitate. Preferably the concentration of sulphuric acid present is 0.005 - 0.1% by weight, more preferably about 0.025% by weight.

-8-

It will be appreciated that weak acids other than citric acid may be used in the boiling solution. In addition glycerine is added at intervals at a rate of .25 to 1% to aid shelling.

CLAIMS

1. A process for packaging shelled hardboiled eggs including the steps of cooking fresh eggs to produce hardboiled eggs, shelling the hardboiled eggs to produce shelled hardboiled eggs, treating the eggs so as to lower the pH at the interface between the white and yolk of each egg so as to inhibit formation of a dark colouration around the yolk, and enclosing the eggs in a hemetrically sealable container which is subsequently sealed and sterilised by a heat treatment.

2. A process according to Claim 1 wherein the shelled hardboiled eggs are immersed in an acidic dipping solution prior to sealing in said container.

3. A process according to Claim 2 wherein the dipping solution is a citric acid solution containing 0.5% to 10% by weight citric acid.

4. A process according to Claim 2 or 3 wherein the eggs are enclosed in said container whilst still moist with said dipping solution.

5. A process according to any preceding claim wherein treatment of the hardboiled shelled eggs is performed to reduce the pH value at the yoke/white interface to an acidic value.

6. A process according to any preceding claims wherein prior to cooking the fresh eggs are preheated to attain a temperature below that at which the egg white coagulates.

7. Apparatus for packaging shelled hardboiled eggs including cooking means for cooking fresh eggs to produce hardboiled eggs, de-shelling means for shelling the hardboiled eggs, and packaging means for enclosing shelled cooked eggs in a sealed container.

8. Apparatus according to Claim 7 wherein the de-shelling means includes a hollow drum which is rotatable about an axis inclined to the horizontal, a portion of the drum being defined by a plurality of longitudinally extending rods spaced about the circumference of the drum.

-10-

9.    Apparatus according to Claim 8 further including storage  and feed means for feeding eggs to said hollow drum, the storage and feed means including a storage tank containing eggs immersed in water and circulation means for circulating water contained within said tank toward a collection area in order to cause eggs to amass at said area and a conveyor for picking up eggs at said collection area and transferring them toward said drum.

10.    Apparatus according to Claim 8 or 9 further including a collection means for collecting eggs emerging from said drum, the collection means including a trough having a pair of side by side water channels along which water is caused to circulate in a closed loop.

FIG. 1

FIG.3

FIG.4

FIG.2